# EUROPEAN PATENT SPECIFICATION

(11) **EP 3 812 055 B1**
(45) Date of publication and mention of the grant of the patent: **07.06.2023**
(21) Application number: 20203200.9
(22) Date of filing: 22.10.2020
(51) Int. Cl.: B21B 15/00, B23K 11/04, B23K 37/047

(54) **A WELDING MACHINE AND RELATED METHOD**
SCHWEISSMASCHINE UND ENTSPRECHENDES VERFAHREN
MACHINE DE SOUDAGE ET PROCÉDÉ ASSOCIÉ

(30) Priority: 24.10.2019 IT 201900019750
(43) Date of publication of application: 28.04.2021
(73) Proprietor: Danieli & C. Officine Meccaniche S.p.A., 33042 Buttrio (IT)
(72) Inventor: TRINCO, Andrea, 33040 Pradamano (IT); TOMAT, Claudio, 33040 Premariacco (IT)
(74) Representative: Celona, Antonio

(56) References cited:
- EP-A1- 1 731 233
- EP-A2- 0 956 911
- WO-A1-2009/003950
- US-A1- 2001 017 290

## Description

### Field of the invention

The present invention relates to a welding machine of the flash welding type for longitudinal metal products, for example billets, bars or blooms, suitable for welding head and tail of two consecutive longitudinal products along a roller table, which is usually arranged upstream of a rolling mill. The invention also relates to a welding method, which can be performed by means of the aforesaid machine.

### Background art

In rolling mills, in particular, of the *endless* operating type, metal products from the casting machine or from external warehouses are welded together and then rolled. Metal products, which are welded, are typically semi-finished metal products, such as billets, bars or booms.

The welding is carried out by joining the tail of one product to the head of the successive product.

Welding is achieved by means of an electric shock produced by power supplies, which supply the products to be welded. This technology is known as flash welding. During welding the products must be effectively locked. To this end, clamping means are provided, which serve to keep the products in place during the welding and often to transmit the electric current to the products to be welded.

Such clamping means typically comprise elements, in particular clamps, which come directly into contact with the products to be welded. As the welding is gradually carried out, the clamps, which hold the head and tail of the products to be welded, are brought close by means of cylinders, referred to as upsetting cylinders. This operation is necessary to compensate the loss of material caused by the melting and to allow the effective adhesion between the two components being welded, which form a joint. However, a string of burr is formed around the joint, due to the outward expulsion of the molten material during welding, which must be removed (or reduced), if in excess, so as not to cause problems during rolling.

Disadvantageously, known welding machines are not capable of perfectly aligning the head and tail of the two products to be welded. An example of welding machine having the features of the preamble of claim 1 is disclosed in EP 0 956 911 A2.

Often, the head and tail of the two products reach the welder folded, for example, because of conduction in the heating furnace (RHF) and/or due to the fact that the welding machine itself folds or misaligns the billets as a result of the wear of the clamps, the dirty state thereof, or an incorrect assembly thereof.

This causes steps or depressions in the welded joint, making it difficult to clean in the successive machinings, also causing further difficulties in the successive rolling. Thus, the need is felt to overcome the stated drawbacks.

### Summary of the invention

It is an object of the present invention to produce a welding machine of the flash welding type provided with an effective aligning system for aligning the head and tail of the two products to be welded.

It is another object of the present invention to produce a welding machine provided with an aligning system, which is simple from a structural point of view, and which nonetheless allows to perform the necessary movements of the known welding machines.

It is a further object of the present invention to produce a welding machine provided with an automatic aligning system, which allows increased operator safety.

The present invention achieves at least one of such objects, and other objects, which will become clear in the light of the present description, by means of a welding machine of the flash welding type for welding the tail of a first longitudinal metal product to the head of a second longitudinal metal product along a feeding direction of said longitudinal metal products, the machine comprising a carriage adapted to slide along the feeding direction, said carriage supporting
a first structure fixed to said carriage; first clamping means, provided on said first structure, for clamping the tail of the first metal product or the head of the second metal product; a second structure; second clamping means, provided on said second structure, for clamping the head of the second metal product or the tail of the first metal product;
wherein first adjustment means are provided for moving the second structure close to, or away from the first structure along said feeding direction;
wherein said second structure is connected to said first structure so as to slide, parallel to the feeding direction, with respect both to the first structure and the carriage; and in that second adjustment means are provided for adjusting, along a plane transversal to said feeding direction, the position of the second structure with respect to the first structure by means of a lifting of the second structure, in order to align said head and said tail.

According to a further aspect of the invention, a welding method of the flash welding type is provided for welding the tail of a first longitudinal metal product to the head of a second longitudinal metal product fed along a feeding direction of said longitudinal metal products, the method being performable by means of the aforesaid machine and comprising the following steps:
a) clamping the tail of the first metal product or the head of the second metal product by means of first clamping means provided on said first structure, and clamping the head of the second metal product or the tail of the first metal product by means of second clamping means provided on said second structure;
b) adjusting, by means of said second adjustment means, the position of the second structure with respect to the first structure by means of a lifting of the second structure along a plane transversal to said feeding direction, so as to align said tail and said head;
c) welding said tail and said head by moving the second structure close to the first structure along said feeding direction, by means of said first adjustment means.

Advantageously, the welding machine of the invention is provided with an aligning system designed to lift, when required, the head of the metal product, for example a billet, entering the machine (or vice versa the tail of the metal product exiting the machine), so as to align the two head and tail surfaces with the same position.

In particular, the two structures or parts of the welding machine, one, which retains the tail of a first product, and the other, which retains the head of a second product, are slidably constrained to each other by means of beams: one part of the machine is fixed to the carriage, instead, the other part is suspended in a cantilever manner by means of the beams.

In one embodiment of the invention, the lifting of the clamping means of the cantilevered suspended part occurs by means of a pushing device, for example a hydraulic system, which causes a roller to rotate, which is mounted onto an eccentric portion of a rotating shaft and which is in contact with the lower cantilevered beam.

In a variant of the invention, due to a particular configuration of the sliding rollers of the structure or movable part, i.e. the slidable and liftable part of the machine which is not integrally constrained to the carriage, said sliding rollers allow the movable part to slide with respect to the fixed part, and the aforesaid movable part can be lifted by means of a slight rotation upwards about a horizontal rotation axis, causing a lifting of the clamping means of the movable part until the head and tail of the two metal products are aligned. In fact, the slight movement of the movable part along an arc-of-a circle, causes a substantially vertical movement of the metal product, for example a billet, which is sustained by said movable part.

In a further variant, this lifting is facilitated by a particular configuration of the upsetting cylinder ends.

In another variant of the invention, at least one sensor is provided, for example a camera, a probe, a laser sensor or another suitable sensor, adapted to detect the difference in height between the position of the head of the metal product entering the welding machine with respect to the tail of the preceding metal product . A software acquires the value of this difference in height and sends a command to the second adjustment means to adjust the position of the movable part with respect to the fixed part by means of an oscillation along a plane, which is transversal, preferably orthogonal, to the feeding direction of the metal products.

In the case of using a camera, it is possible to transmit the images to a monitor, allowing an operator, at a safe distance from the machine, to check the alignment of the metal products, and thus, the centering position of the welding joint.

Further features and advantages of the invention will become more apparent in light of the detailed description of exemplary but not exclusive embodiments.

The dependent claims describe particular embodiments of the invention.

### Brief description of the figures

Reference is made to the accompanying drawing tables in the description of the invention, which is provided by way of a non-limiting example, in which:
Figure 1 shows a first side view of a first embodiment of the welding machine according to the invention;
Figure 2 shows a second side view of the machine in Figure 1;
Figure 3a shows a third side view of the machine in Figure 1;
Figure 3b shows the aforesaid third side view in a different operating position;
Figure 4 shows a cross-section along a plane A-A of the machine in Figure 3a;
Figure 5 shows an enlargement of a first part in Figure 4;
Figure 6 shows an enlargement of a second part in Figure 4;
Figure 7 shows a view from above of the machine in Figure 1;
Figure 8 shows a cross-section of a component of the machine in Figure 3b;
Figure 9 shows a side view of a second embodiment of the welding machine according to the invention.

The same numerals and letters of reference in the figures identify the same elements or components.

### Description of exemplary embodiments of the invention

Some examples of a welding machine of the flash welding type according to the invention are illustrated with reference to the Figures.

In all of the embodiments of the invention, the welding machine, which is suitable for welding the tail of a first longitudinal metal product to the head of a second longitudinal metal product along a feeding direction of said longitudinal metal products, comprises a carriage 1, adapted to slide along said feeding direction above a roller table (not shown) on which the longitudinal metal products, such as billets, blooms or bars, advance.

The carriage 1 supports:
- a first structure, or body, 2 connected, for example fixed, to said carriage 1;
- first clamping means 3, 4, provided on the first structure 2, for clamping the tail of the first metal product, or the head of the second metal product;
- a second structure, or body, 5 connected to the first structure 2 so as to slide, parallel to the feeding direction, with respect both to the first structure 2 and the carriage 1;
- second clamping means 6, 7, provided on the second structure 5, for clamping the head of the second metal product, or the tail of the first metal product;
- first adjustment means 22, 23 for moving the second structure 5 close to, or away from the first structure 2 along the feeding direction, i.e. to adjust the distance of the second structure 5 from the first structure 2 along said feeding direction.

The first structure 2 is fixed to the carriage 1 by means of at least one constraint 33, preferably only one constraint. The constraint 33 can allow a slight oscillation of the first structure 2 thereabout. Thus, the second structure 5, also being connected to the first structure 2, can oscillate slightly about the constraint 33.

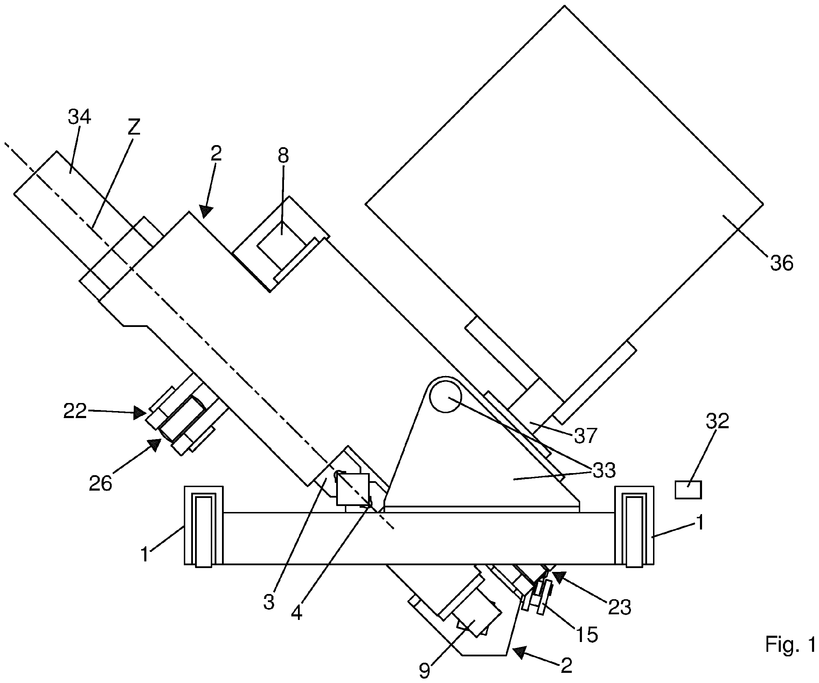

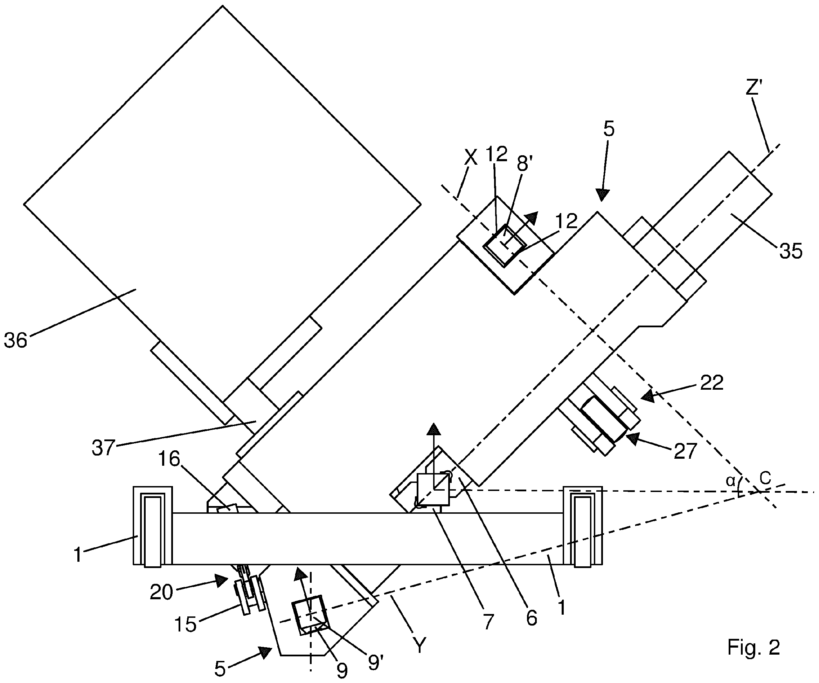

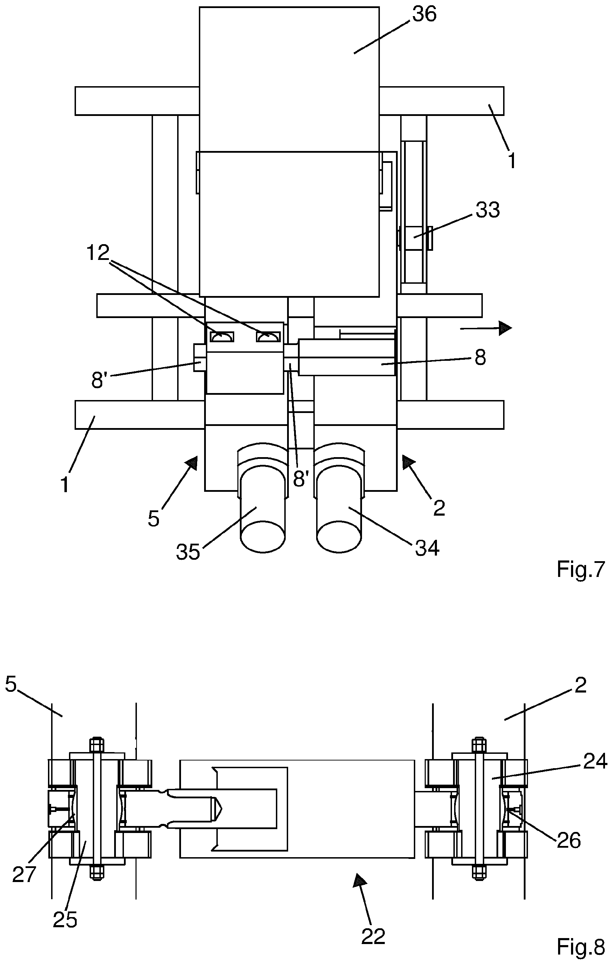

In a first embodiment of the welding machine, shown in Figures 1-8, the first structure 2 defines a longitudinal axis Z (Figure 1), which is inclined, with respect to the horizontal plane defined by the carriage 1, by an acute angle, preferably between 30° and 50°, for example 45°. The second structure 5, defining a longitudinal axis Z' thereof (Figure 2), is arranged substantially parallel to the first structure 2 and spaced apart from the latter along the feeding direction of the products to be welded.

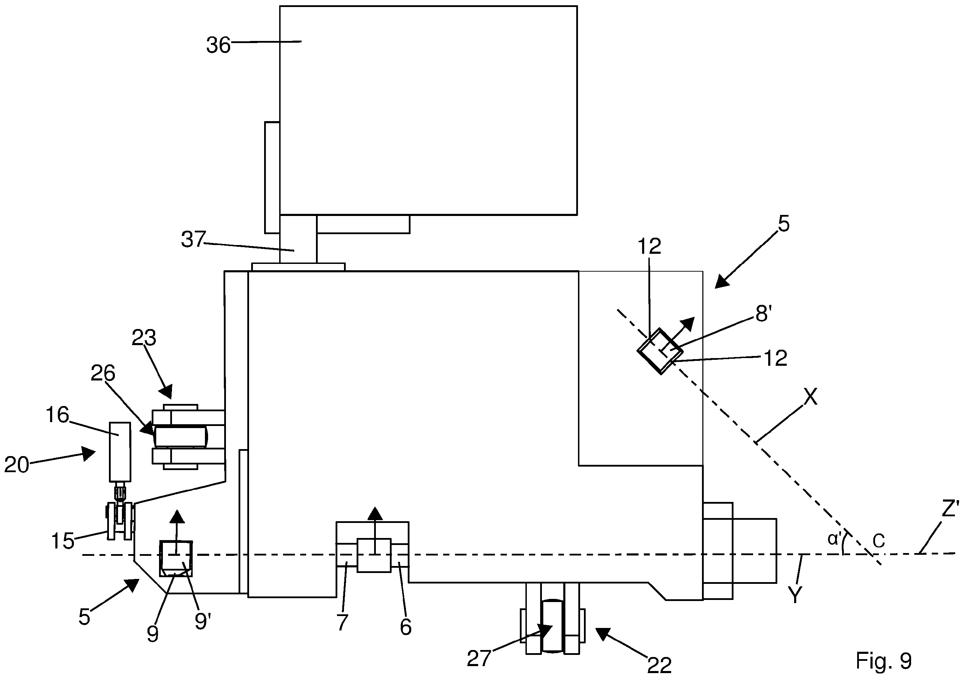

In a second embodiment of the welding machine, shown in Figure 9, the first structure 2 defines a substantially horizontal longitudinal axis Z (not shown). Similarly, the second structure 5, defining a longitudinal axis Z' thereof (Figure 9), is arranged substantially parallel to the first structure 2 and spaced apart from the latter along the feeding direction of the products to be welded.

In all of the embodiments, the first clamping means 3, 4 of the first structure 2 comprise respective upper clamps and lower clamps. While the lower clamps are fixed clamps, the upper clamps can be moved by a respective movement cylinder 34 (Figure 1).

The second clamping means 6, 7 of the second structure 5 comprise respective upper clamps and lower clamps. In this case, too, while the lower clamps are fixed clamps, the upper clamps can be moved by a respective movement cylinder 35 (Figures 2 and 9).

Alternatively, it is nonetheless also possible to make the lower clamps movable.

The welding machine is provided with a transformer 36 and conductors 37 connected to the structure 2 and to the structure 5, respectively, to supply current, in a known manner, to the products to be welded.

Advantageously, second adjustment means are provided, for adjusting the position of the second structure 5 with respect to the first structure 2 by means of a lifting of the second structure 5 along a plane transversal, preferably orthogonal, to said feeding direction, so as to align the tail and the head of the two products along the feeding direction. This lifting can occur by means of a slight rotation of the second structure 5 about a rotation axis C parallel to the feeding direction (Figures 2 and 9). In the first embodiment (Figure 2) said rotation axis C is preferably arranged on the side opposite to the side where the transformer 36 is present (Figure 2).

In particular, the second structure 5 is connected in a cantilever manner to the first structure 2, said second structure 5 being sliding on at least two supports 8, 9, preferably cantilevered beams, fixed to the first structure 2 and having longitudinal axes parallel to each other and to the feeding direction of the products.

Preferably, the second adjustment means are integrated into the second structure 5 and comprise a pushing device 20 configured to push on at least one of the cantilevered beams 8,9 to lift the second structure 5 slightly with respect to the first structure 2.

In the embodiments shown in the Figures, only one first cantilevered beam 8 and one second cantilevered beam 9 are provided, fixed to a first end and to a second end of the first structure 2, respectively.

Optionally, the first end of the second structure 5 (which is the upper end in the case of the welding machine being inclined in Figure 2) can be slidably connected to a first end of the first structure 2 by means of the first cantilevered beam 8, or upper cantilevered beam. Whereas, the second end of the second structure 5 (which is the lower end in the case of the welding machine being inclined in Figure 2) can be slidably connected to a second end of the first structure 2 by means of the second cantilevered beam 9, or lower cantilevered beam.

Therefore, the second structure 5 is sliding on the upper and lower cantilevered beams 8, 9 so as to move close to, or away from, the first structure 2.

Preferably, the pushing device 20 is configured to push on the lower cantilevered beam 9 to lift the second structure 5.

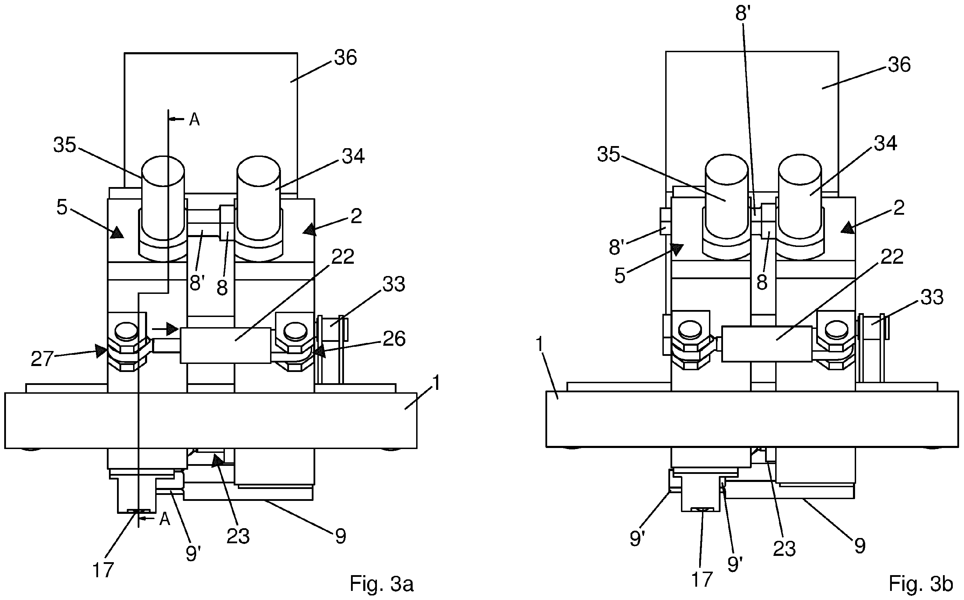

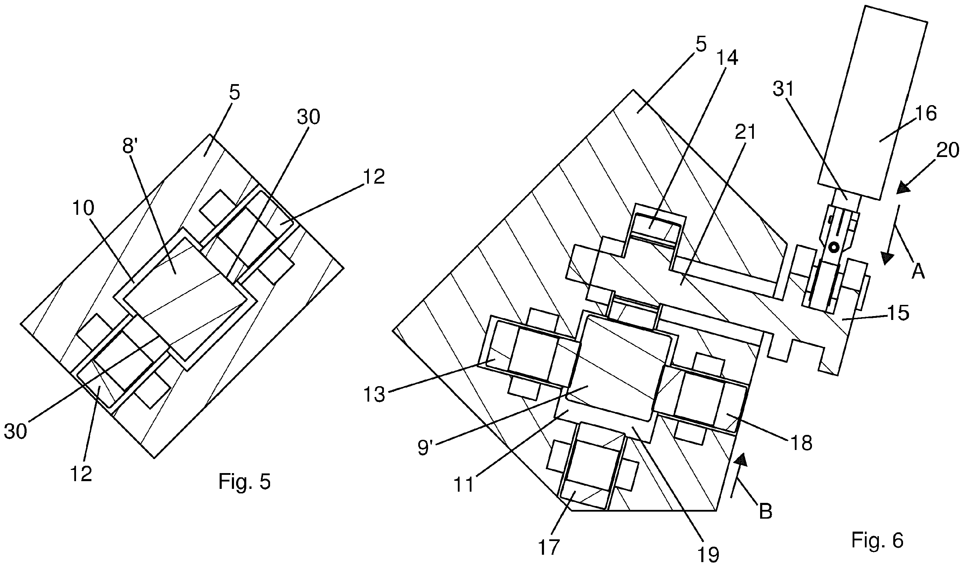

As shown in the variant in Figures 3a and 3b, but which can be valid for both embodiments described herein, the upper cantilevered beam 8 has a first portion 8' thereof having a quadrangular section, which is distal from the first structure 2 and inserted into a through hole 10 (Figure 5), having a quadrangular section, of the second structure 5. Preferably, the upper cantilevered beam 8 has a second portion thereof that is proximal and fixed integrally to the first structure 2, while the first portion 8' is cantilevered and, optionally, there is provided a shoulder between said first portion 8' and the adjacent second portion. Optionally, also the second portion of the cantilevered beam 8 has a quadrangular section, and, preferably, the side surfaces of said second portion are parallel to the corresponding side surfaces of the first portion 8'.

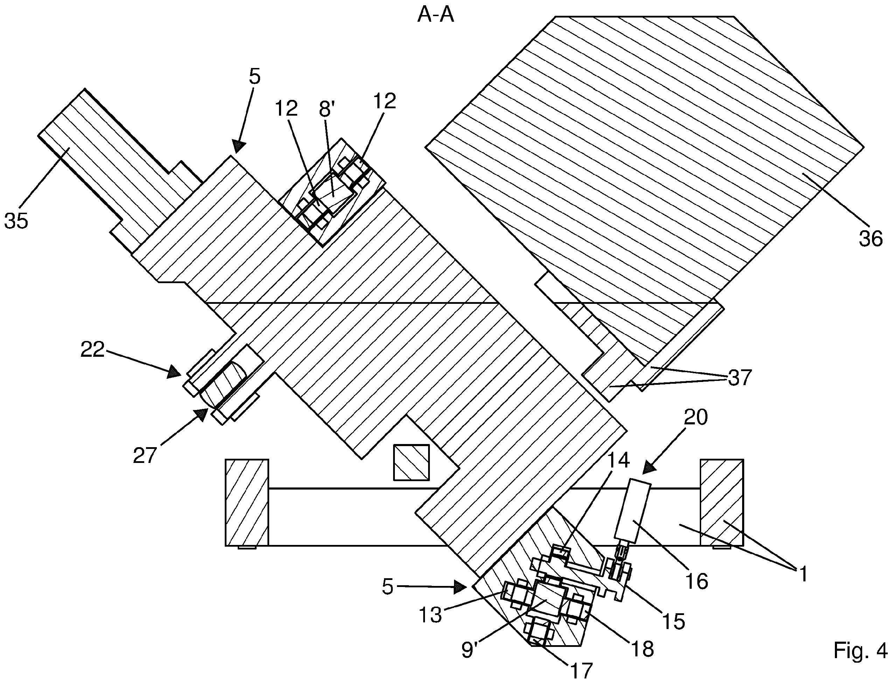

The through hole 10 is provided, on at least two opposite side surfaces, with first rollers 12 (Figures 4 and 5) for a sliding of the second structure 5 on the cantilevered beam 8, in particular on the portion 8' thereof.

Preferably, a pair of first rollers 12 is provided on each of said two opposite side surfaces of the through hole 10. It is not excluded that only one roller 12, or three or more rollers 12, can be provided, on each of said two opposite side surfaces, inside the through hole 10.

Advantageously, the first rollers 12 have a convex side surface 30, i.e. slightly convex, in contact with a respective side surface of the upper cantilevered beam 8 to facilitate a small rotation, about the axis C, of the second structure 5 along a plane, which is transversal, preferably orthogonal, to the feeding direction.

The first rollers 12 are idle rollers, accommodated in respective seats obtained in the second structure 5, i.e. seats obtained in said two inner and opposite side surfaces of the through hole 10. Such rollers 12 protrude slightly into said through hole 10 to come into contact with mutually opposite surfaces of the upper cantilevered beam 8.

Similarly, the lower cantilevered beam 9 has a first portion 9' thereof having a quadrangular section, distal from the first structure 2 and inserted into a through hole 11 (Figure 6), having a quadrangular section, of the second structure 5. Preferably, the lower cantilevered beam 9 has a second portion thereof which is proximal and fixed integrally to the first structure 2, while the first portion 9' is cantilevered and, optionally, there is provided a shoulder between said first portion 9' and the adjacent second portion. Optionally, also the second portion of the cantilevered beam 9 has a quadrangular section, and preferably the side surfaces of said second portion are not parallel to the corresponding side surfaces of the first portion 9' (Figure 3a).

Alternatively, the shape of the cross-section of the first portion 9' of the lower cantilevered beam 9 can be different from quadrangular, for example round.

In a variant, the through hole 11 is provided with four second rollers 13, 14, 17, 18. Each second roller 13, 14, 17, 18 is arranged at a respective inner side surface of the through hole 11, for a sliding of the second structure 5 on the cantilevered beam 9.

In particular, each second roller 13, 14, 17, 18 is accommodated in a respective seat obtained in the second structure 5, i.e. in a respective seat obtained in a corresponding inner side surface of the through hole 11, and protruding into said through hole 11 for possibly coming into contact with a respective side surface of the lower cantilevered beam 8. The two side rollers 13, 18 and the lower roller 17 are idle rollers, while the upper roller 14 is a controlled roller, which however is idle on rotation.

Advantageously, the upper roller 14 of said four second rollers is mounted on an eccentric portion of a rotating shaft 21, and the pushing device 20 is adapted to rotate said rotating shaft 21 so that the upper roller 14, protruding more from the seat thereof, pushes on the underlying lower cantilevered beam 9 in order to lift the second structure 5.

In fact, in a rest position, the first portion 9' of the lower cantilevered beam 9 is in contact with the upper roller 14, which is in a partially retracted position inside the seat thereof, and in contact with two side rollers 13, 18 of said second rollers, while a gap 19 can be present between the lower roller 17 of said second rollers and the first portion 9' of the lower cantilevered beam 9.

Whereas, in a thrust position, the upper roller 14 is in a more protruding position from the seat thereof, with respect to the rest position, so that the second structure 5 is lifted until possibly making contact between the lower roller 17 and the first portion 9'.

In an alternative variant, the lower roller 17 is not provided and, in the thrust position, the second structure 5 is lifted without making contact between the lower inner side surface of the through hole 11, i.e. the inner side surface not provided with a roller, and the first portion 9'.

In a preferred variant of the invention, shown in Figure 6, the pushing device 20 comprises an actuator 16, preferably a hydraulic cylinder, adapted to actuate, for example by means of a stem 31 connected to the piston (not visible), a lever 15 at a first end thereof, said lever 15 being integral at a second end thereof with the rotating shaft 21 onto whose eccentric portion the upper roller 14 is keyed.

Therefore, by actuating the actuator 16, the stem 31 moves downwards along the arrow A lowering the first end of the lever 15 connected to the stem 31 and, thus, causing the second end of the lever 15, for example keyed to the shaft 21, to rotate around the same rotation axis as the shaft 21. In this way, the shaft 21 will rotate, also causing the upper roller 14 to rotate. Preferably, the maximum rotation of the shaft 21 about the axis thereof, and thus the maximum rotation of the upper roller 14, is by an angle of less than, or equal to 180°, for example between 45° to 135°. Following the rotation of the upper roller 14, the latter will be more protruding from the seat thereof, causing a lifting of the lower part of the second structure 5 along the arrow B (Figure 6) until possibly also bringing the lower roller 17 into contact with the portion 9' of the lower cantilevered beam 9.

Preferably, as visible in Figure 2 and 9, the upper cantilevered beam 8 is configured so that the first portion 8' thereof has a plane of symmetry X, which is perpendicular to the mutually opposite two side surfaces thereof in contact with the first rollers 12; while the lower cantilevered beam 9 is configured so that the first portion 9' thereof has a plane of symmetry Y parallel to the side surface thereof in contact with the upper roller 14. The plane of symmetry X and the plane of symmetry Y are incident, defining an axis C, which is parallel to the feeding direction and about which the second structure 5 can rotate slightly. In the first embodiment, shown in Figure 2, the acute angle α defined by the planes X and Y, in the rest position (i.e. when the second structure 5 is not lifted), can be between 40° and 90°, preferably between 45° and 65°. The rotation of the second structure 5 about the axis C can occur in a range between 1° and 5°, preferably between 1° and 3°.

This rotation is facilitated by the presence of the convex side surface 30 of the first rollers 12 in contact with the respective side surface of the upper cantilevered beam 8.

In one variant, the plane of symmetry X forms an acute angle between 25° and 45° with a horizontal plane defined by the carriage 1; while the plane of symmetry Y forms an acute angle between 15° and 20° with said horizontal plane. The sum of these two acute angles is equal to the acute angle α (Figure 2).

Furthermore, the axis C is arranged, with respect to the welding machine, on side opposite to where the transformer 36 is present (Figure 2).

In the second embodiment, shown in Figure 9, the acute angle α' defined by the planes X and Y, in the rest position, can be between 5° and 85°, preferably between 30° and 60°. The rotation of the second structure 5 about the axis C can occur in a range between 1° and 5°, preferably between 1° and 3°.

This rotation is facilitated by the presence of the convex side surface 30 of the first rollers 12 in contact with the respective side surface of the upper cantilevered beam 8.

In this embodiment, the plane of symmetry Y is substantially horizontal and, in the rest position, also parallel to the longitudinal axis Z' of the second structure 5.

Preferably, in both embodiments, the axis C is an axis external to the welding machine, i.e. an axis which does not intersect any component of the welding machine.

Optionally, the first adjustment means are upsetting cylinders 22, 23, preferably only two in number.

The upsetting cylinders 22, 23 are hinged, at a first end thereof, to the first structure 2 and, at a second end thereof, to the second structure 5 by means of respective pins 24, 25. Advantageously, both the first end and the second end of each upsetting cylinder 22, 23 are provided with a respective ball joint 26, 27. These ball joints at the two ends of each upsetting cylinder allow the second structure 5 to be lifted with respect to the first structure 2 fixed to the carriage 1, facilitating a slight inclination of the same upsetting cylinders with respect to the normally horizontal position thereof, which is parallel to the feeding direction of the products.

Preferably, in the variants shown in the Figures, a first upsetting cylinder 22 is arranged at the bottom behind the welding machine, i.e. at the bottom behind both of the first structure 2 and of the second structure 5, on the side opposite to the side on which the upper cantilevered beam 8 is fixed and/or on which the transformer 36 is provided. Instead, the second upsetting cylinder 23 is arranged at one end of the welding machine, for example, at the foot both of the first structure 2 and of the second structure 5 in the case of the variant in Figure 1. Preferably, in all of the embodiments, the second upsetting cylinder 23 is arranged close to the side opposite to the side on which the first upsetting cylinder 22 is provided.

Preferably, the axes of the pins 24, 25 of the upsetting cylinder 22 define a plane, which is transversal (Figures 1 and 9), for example substantially orthogonal, to the plane defined by the axes of the pins of the upsetting cylinder 23.

In one advantageous variant of the invention, at least one sensor 32 is provided, for example a camera, a probe, a laser sensor or another suitable sensor, which is adapted to detect the difference in height between the head of the metal product entering the welding machine and the tail of the preceding metal product. A suitable software acquires the value of said difference in height and sends a command to the second adjustment means, preferably the pushing device 20, to automatically adjust the position of the second structure 5 with respect to the first structure 2.

In the case of using a camera, it is possible to transmit the images to a monitor, allowing an operator, at a safe distance from the machine, to check and adjust the alignment of the metal products, and thus, the centering position of the welding joint. Described below are the steps of a flash welding method according to the present invention.

The welding method, which can be performed by means of the machine described above, comprises the following steps:
a) clamping the tail of the first metal product or the head of the second metal product by means of first clamping means 3, 4 provided on the first structure 2, and clamping the head of the second metal product or the tail of the first metal product by means of second clamping means 6, 7 provided on the second structure 5;
b) adjusting, by means of the second adjustment means, the position of the second structure 5 with respect to the first structure 2 by means of a lifting, preferably by means of a rotation, of the second structure 5 along a plane transversal to said feeding direction, so as to align the tail and the head along the feeding direction;
c) welding the tail and the head by moving the second structure 5 close to the first structure 2 along said feeding direction, by means of the first adjustment means.

In step b) the rotation of the second structure 5 occurs about the axis C, parallel to the feeding direction, in a range between 1° and 5°, preferably between 1° and 3°.

Preferably, the following steps are comprised between step a) and step b):
- detecting a difference in height, by means of at least one sensor 32, between the head of the metal product entering the welding machine and the tail of the preceding metal product;
- acquiring the value of said difference in height by means of a software and sending a command to the second adjustment means, to adjust the position of the second structure 5 with respect to the first structure 2.

## Claims

1. A welding machine of the flash welding type for welding a tail of a first longitudinal metal product to a head of a second longitudinal metal product along a feeding direction of said longitudinal metal products, the machine comprising a carriage (1) adapted to slide along the feeding direction, said carriage (1) supporting
- a first structure (2) fixed to said carriage (1);
- first clamping means (3, 4), provided on said first structure (2), for clamping the tail of the first metal product or the head of the second metal product;
- a second structure (5);
- second clamping means (6, 7), provided on said second structure (5), for clamping the head of the second metal product or the tail of the first metal product;
wherein first adjustment means are provided for moving the second structure (5) close to, or away from the first structure (2) along said feeding direction;
**characterised in that** said second structure (5) is connected to said first structure (2) so as to slide, parallel to the feeding direction, with respect both to the first structure (2) and the carriage (1);
and **in that** second adjustment means are provided for adjusting, along a plane transversal to said feeding direction, the position of the second structure (5) with respect to the first structure (2) by means of a lifting of the second structure (5), in order to align said tail and said head.

2. A welding machine according to claim 1, wherein said first adjustment means are upsetting cylinders (22, 23), preferably only two in number; wherein said upsetting cylinders (22, 23) are hinged at a first end thereof to the first structure (2) and at a second end thereof to the second structure (5) by means of respective pins (24, 25); and wherein both the first end and the second end of each upsetting cylinder (22, 23) are provided with a respective ball joint.

3. A welding machine according to claim 1 or 2, wherein the second structure (5) is connected to the first structure (2) in a cantilever manner, said second structure (5) being slidable on at least two supports (8, 9) fixed to, and at least partially protruding from, the first structure (2) and having longitudinal axes parallel to each other and to the feeding direction; wherein at least one first portion (8') of a first support (8) of said at least two supports (8, 9) is cantilevered and has at least one plane of symmetry X; wherein at least one first portion (9') of a second support (9) of said at least two supports (8, 9) is cantilevered and has at least one plane of symmetry Y; and wherein the plane of symmetry X and the plane of symmetry Y are incident, thus defining an axis C, parallel to the feeding direction and about which the second structure (5) can rotate.

4. A welding machine according to claim 3, wherein said second adjustment means are integrated into the second structure (5) and comprise a pushing device (20) configured to push on at least one of the two supports (8, 9) to lift the second structure (5).

5. A welding machine according to claim 4, wherein said at least two supports are a first cantilevered beam (8) and a second cantilevered beam (9), preferably fixed to a first end and a second end of the first structure (2), respectively; preferably wherein said pushing device (20) is configured to push on said second cantilevered beam (9) to lift the second structure (5).

6. A welding machine according to claim 4 or 5, wherein the first cantilevered beam (8) has the first portion (8') thereof, having a quadrangular section, which is distal from the first structure (2) and inserted into a first through hole (10), having a quadrangular section, of the second structure (5) provided, on at least two opposite inner sides, with first rollers (12) for the second structure (5) to slide on said first cantilevered beam (8), and wherein the plane of symmetry X of the first portion (8') is perpendicular to the side surfaces of the first portion (8') in contact with the first rollers (12); preferably wherein the second cantilevered beam (9) has the first portion (9') thereof, having a quadrangular section, which is distal from the first structure (2) and inserted into a second through hole (11), having a quadrangular section, of the second structure (5) provided with at least three second rollers (13, 14, 17, 18), each second roller being arranged at a respective inner side of the second through hole, for the second structure (5) to slide on said second cantilevered beam (9), and wherein the plane of symmetry Y of the first portion (9') is parallel to the side surface of the first portion (9') in contact with an upper roller (14) of said at least three second rollers; preferably wherein the upper roller (14) of said at least three second rollers is mounted on an eccentric portion of a rotating shaft (21) and the pushing device (20) is adapted to rotate said rotating shaft so that said upper roller (14) pushes on said second cantilevered beam (9) to lift the second structure (5).

7. A welding machine according to claim 6, wherein, in a rest position, the first portion (9') of the second cantilevered beam (9) is in contact with the upper roller (14), which is in a retracted position inside a seat thereof, and in contact with two side rollers (13, 18) of said second rollers, while a gap (19) is present between a lower inner side of the second through hole (11) and said first portion (9') or between a lower roller (17) of said second rollers and said first portion (9'); and wherein, in a pushing position, the upper roller (14) is in a more protruding position from the seat thereof, with respect to the case of the rest position, so that the second structure (5) is lifted up, preferably lifted up to a possible contact between the lower roller (17) and the first portion (9').

8. A welding machine according to claim 6 or 7, wherein the first cantilevered beam (8) has a second portion thereof that is proximal and integrally fixed to the first structure (2), while the first portion (8') is cantilevered; and/or wherein the second cantilevered beam (9) has a second portion thereof that is proximal and integrally fixed to the first structure (2), while the first portion (9') is cantilevered.

9. A welding machine according to one of the claims from 6 to 8, wherein said pushing device (20) comprises an actuator (16) adapted to actuate a lever (15) at a first end thereof, said lever (15) being integral, at a second end thereof, with the rotating shaft (21) onto which the upper roller (14) is keyed.

10. A welding machine according to one of the claims from 6 to 9, wherein a pair of first rollers (12) is provided on each of said two opposite inner sides of the first through hole (10).

11. A welding machine according to one of the claims from 6 to 10, wherein said first rollers (12) have a convex side surface (30) in contact with a respective side surface of the first cantilevered beam (8).

12. A welding machine according to one of the claims from 6 to 11, wherein said first rollers (12) are idle, accommodated in respective seats obtained in the second structure (5) and protruding into the first through hole (10) to come into contact with mutually opposite surfaces of the first cantilevered beam (8); preferably, wherein the two side rollers (13, 18) and the possible lower roller (17) of said second rollers are idle, accommodated in respective seats obtained in the second structure (5) and protruding into the second through hole (11), while the upper roller (14) is a driven roller, but idle to the rotation.

13. A welding machine according to any one of the preceding claims, wherein there is provided at least one sensor (32), adapted to detect the difference in height between the head of the metal product entering the welding machine and the tail of a further metal product preceding said metal product; and wherein there is provided a software, adapted to acquire the value of said difference in height and send a command to the second adjustment means to adjust the position of the second structure (5) with respect to the first structure (2).

14. A welding method of the flash welding type for welding together a tail of a first longitudinal metal product to a head of a second longitudinal metal product fed along a feeding direction of said longitudinal metal products, the method being performable by means of a welding machine according to any one of the preceding claims and comprising the following stages:
a) clamping the tail of the first metal product or the head of the second metal product by means of first clamping means (3, 4) provided on said first structure (2), and clamping the head of the second metal product or the tail of the first metal product by means of second clamping means (6, 7) provided on said second structure (5);
b) adjusting, by means of said second adjustment means, the position of the second structure (5) with respect to the first structure (2) by means of a lifting of the second structure (5) along a plane transversal to said feeding direction, so as to align said tail and said head along the feeding direction;
c) welding said tail and said head by moving the second structure (5) close to the first structure (2) along said feeding direction, by means of said first adjustment means.

15. A method according to claim 14, wherein said lifting occurs by means of a rotation of the second structure (5) about an axis C, parallel to the feeding direction, in a range between 1° and 5°, preferably between 1° and 3°.

16. A method according to claim 14 or 15, wherein the following stages are provided between stage a) and stage b):
- detecting a difference in height, by means of at least one sensor (32), between the head of the metal product entering the welding machine and the tail of a further metal product preceding said metal product;
- acquiring the value of said difference in height and sending, by means of a software, a command to the second adjustment means to adjust the position of the second structure (5) with respect to the first structure (2).

## Patentansprüche

1. Schweißmaschine des Abbrennschweißtyps zum Verschweißen eines Endes eines ersten Längsmetallprodukts mit einem Kopf eines zweiten Längsmetallprodukts entlang einer Vorschubrichtung der Längsmetallprodukte, wobei die Maschine einen Schlitten (1) umfasst, der geeignet ist, entlang der Vorschubrichtung zu gleiten, wobei der Schlitten (1) Folgendes trägt
- eine erste Struktur (2), die an dem Schlitten (1) befestigt ist;
- erste Klemmmittel (3, 4), die an der ersten Struktur (2) vorgesehen sind, um das Ende des ersten Metallprodukts oder den Kopf des zweiten Metallprodukts zu klemmen;
- eine zweite Struktur (5);
- zweite Klemmmittel (6, 7), die an der zweiten Struktur (5) vorgesehen sind, um den Kopf des zweiten Metallprodukts oder das Ende des ersten Metallprodukts zu klemmen;
wobei erste Einstellmittel vorgesehen sind, um die zweite Struktur (5) entlang der Vorschubrichtung nahe an die erste Struktur (2) oder weg von der ersten Struktur zu bewegen; **dadurch gekennzeichnet, dass** die zweite Struktur (5) mit der ersten Struktur (2) so verbunden ist, dass sie parallel zur Vorschubrichtung sowohl in Bezug auf die erste Struktur (2) als auch auf den Schlitten (1) gleitet;
und dass zweite Einstellmittel vorgesehen sind, um entlang einer Ebene quer zur Vorschubrichtung die Position der zweiten Struktur (5) in Bezug auf die erste Struktur (2) durch Anheben der zweiten Struktur (5) einzustellen, um das Ende und den Kopf auszurichten.

2. Schweißmaschine nach Anspruch 1, wobei die ersten Einstellmittel Stauchzylinder (22, 23) sind, vorzugsweise nur zwei an Zahl; wobei die Stauchzylinder (22, 23) an einem ersten Ende davon an der ersten Struktur (2) und an einem zweiten Ende davon an der zweiten Struktur (5) mittels entsprechender Stifte (24, 25) scharniert sind; und wobei sowohl das erste Ende als auch das zweite Ende jedes Stauchzylinders (22, 23) mit einem entsprechenden Kugelgelenk versehen sind.

3. Schweißmaschine nach Anspruch 1 oder 2, wobei die zweite Struktur (5) freitragend mit der ersten Struktur (2) verbunden ist, wobei die zweite Struktur (5) auf mindestens zwei Trägern (8, 9) verschiebbar ist, die an der ersten Struktur (2) befestigt sind und zumindest teilweise aus dieser herausragen und deren Längsachsen parallel zueinander und zur Vorschubrichtung verlaufen; wobei mindestens ein erster Abschnitt (8') eines ersten Trägers (8) der mindestens zwei Träger (8, 9) freitragend ist und mindestens eine Symmetrieebene X aufweist; wobei mindestens ein erster Abschnitt (9') eines zweiten Trägers (9) der mindestens zwei Träger (8, 9) freitragend ist und mindestens eine Symmetrieebene Y aufweist; und wobei die Symmetrieebene X und die Symmetrieebene Y zusammenfallen und so eine Achse C definieren, die parallel zur Vorschubrichtung verläuft und um die sich die zweite Struktur (5) drehen kann.

4. Schweißmaschine nach Anspruch 3, wobei die zweiten Einstellmittel in die zweite Struktur (5) integriert sind und eine Schiebevorrichtung (20) umfassen, die so ausgebildet ist, dass sie auf mindestens eine der beiden Träger (8, 9) drückt, um die zweite Struktur (5) anzuheben.

5. Schweißmaschine nach Anspruch 4, wobei die mindestens zwei Träger ein erster freitragender Balken (8) und ein zweiter freitragender Balken (9) sind, die vorzugsweise an einem ersten Ende bzw. einem zweiten Ende der ersten Struktur (2) befestigt sind; wobei die Schiebevorrichtung (20) vorzugsweise so ausgebildet ist, dass sie auf den zweiten freitragenden Balken (9) drückt, um die zweite Struktur (5) anzuheben.

6. Schweißmaschine nach Anspruch 4 oder 5, wobei der erste freitragende Balken (8) einen ersten Abschnitt (8') mit viereckigem Querschnitt aufweist, der von der ersten Struktur (2) entfernt ist und in ein erstes Durchgangsloch (10) mit viereckigem Querschnitt der zweiten Struktur (5) eingesetzt ist, an mindestens zwei gegenüberliegenden Innenseiten mit ersten Rollen (12) versehen ist, damit die zweite Struktur (5) auf dem ersten freitragenden Balken (8) gleiten kann, und wobei die Symmetrieebene X des ersten Abschnitts (8') senkrecht zu den Seitenflächen des ersten Abschnitts (8') in Kontakt mit den ersten Rollen (12) ist; wobei vorzugsweise der erste Abschnitt (9') des zweiten freitragenden Balkens (9) einen viereckigen Querschnitt aufweist, der von der ersten Struktur (2) entfernt ist und in ein zweites Durchgangsloch (11) mit viereckigem Querschnitt der zweiten Struktur (5) eingesetzt ist, die mit mindestens drei zweiten Rollen (13, 14, 17, 18) versehen ist, wobei jede zweite Rolle an einer jeweiligen Innenseite des zweiten Durchgangslochs angeordnet ist, damit die zweite Struktur (5) auf dem zweiten freitragenden Balken (9) gleiten kann, und wobei die Symmetrieebene Y des ersten Abschnitts (9') parallel zu der Seitenfläche des ersten Abschnitts (9') in Kontakt mit einer oberen Rolle (14) der mindestens drei zweiten Rollen ist; wobei die obere Rolle (14) der mindestens drei zweiten Rollen vorzugsweise an einem exzentrischen Abschnitt einer Drehwelle (21) angebracht ist und die Schiebevorrichtung (20) so ausgelegt ist, dass sie die Drehwelle dreht, so dass die obere Rolle (14) auf den zweiten freitragenden Balken (9) drückt, um die zweite Struktur (5) anzuheben.

7. Schweißmaschine nach Anspruch 6, wobei in einer Ruheposition der erste Abschnitt (9') des zweiten freitragenden Balkens (9) in Kontakt mit der oberen Rolle (14), die sich in einer zurückgezogenen Position innerhalb eines Sitzes davon befindet, und in Kontakt mit zwei Seitenrollen (13, 18) der zweiten Rollen ist, während eine Lücke (19) zwischen einer unteren inneren Seite des zweiten Durchgangslochs (11) und dem ersten Abschnitt (9') oder zwischen einer unteren Rolle (17) der zweiten Rollen und dem ersten Abschnitt (9') vorhanden ist; und wobei sich die obere Rolle (14) in einer Schiebeposition in einer weiter vorstehenden Position von ihrem Sitz befindet, in Bezug auf den Fall der Ruheposition, so dass die zweite Struktur (5) angehoben wird, vorzugsweise bis zu einem möglichen Kontakt zwischen der unteren Rolle (17) und dem ersten Abschnitt (9') angehoben wird.

8. Schweißmaschine nach Anspruch 6 oder 7, wobei der erste freitragende Balken (8) einen zweiten Abschnitt aufweist, der proximal und einstückig an der ersten Struktur (2) befestigt ist, während der erste Abschnitt (8') freitragend ist; und/oder wobei der zweite freitragende Balken (9) einen zweiten Abschnitt aufweist, der proximal und einstückig an der ersten Struktur (2) befestigt ist, während der erste Abschnitt (9') freitragend ist.

9. Schweißmaschine nach einem der Ansprüche 6 bis 8, wobei die Schiebevorrichtung (20) ein Stellglied (16) aufweist, der geeignet ist, an seinem ersten Ende einen Hebel (15) zu betätigen, wobei der Hebel (15), an seinem zweiten Ende, mit der Drehwelle (21) einstückig ist, auf der sich die obere Rolle (14) verkeilt.

10. Schweißmaschine nach einem der Ansprüche 6 bis 9, wobei auf jeder der beiden gegenüberliegenden Innenseiten des ersten Durchgangslochs (10) ein Paar erster Rollen (12) vorgesehen ist.

11. Schweißmaschine nach einem der Ansprüche 6 bis 10, wobei die ersten Rollen (12) eine konvexe Seitenfläche (30) aufweisen, die mit einer entsprechenden Seitenfläche des ersten freitragenden Balkens (8) in Kontakt steht.

12. Schweißmaschine nach einem der Ansprüche 6 bis 11, wobei die ersten Rollen (12) im Leerlaufzustand sind, in entsprechenden Sitzen untergebracht sind, die in der zweiten Struktur (5) erhalten wurden, und in das erste Durchgangsloch (10) hineinragen, um mit einander gegenüberliegenden Oberflächen des ersten freitragenden Balkens (8) in Kontakt zu kommen; vorzugsweise, wobei die beiden Seitenrollen (13, 18) und die mögliche untere Rolle (17) der zweiten Rollen im Leerlaufzustand sind, in entsprechenden Sitzen untergebracht sind, die in der zweiten Struktur (5) erhalten wurden und in das zweite Durchgangsloch (11) hineinragen, während die obere Rolle (14) eine angetriebene Rolle ist, jedoch im Leerlaufzustand zur Drehung.

13. Schweißmaschine nach einem der vorhergehenden Ansprüche, wobei mindestens ein Sensor (32) vorgesehen ist, der geeignet ist, den Höhenunterschied zwischen dem Kopf des in die Schweißmaschine eintretenden Metallprodukts und dem Ende eines weiteren Metallprodukts, das dem Metallprodukt vorausgeht, zu erfassen; und wobei eine Software vorgesehen ist, die geeignet ist, den Wert des Höhenunterschieds zu erfassen und einen Befehl an die zweite Einstelleinrichtung zu senden, um die Position der zweiten Struktur (5) in Bezug auf die erste Struktur (2) einzustellen.

14. Schweißverfahren vom Typ Abbrennschweißen zum Zusammenschweißen eines Endes eines ersten Längsmetallprodukts mit einem Kopf eines zweiten Längsmetallprodukts, das entlang einer Vorschubrichtung der Längsmetallprodukte vorgeschoben wird, wobei das Verfahren mittels einer Schweißmaschine nach einem der vorhergehenden Ansprüche durchgeführt werden kann und die folgenden Schritte umfasst:
a) Klemmen des Endes des ersten Metallprodukts oder des Kopfes des zweiten Metallprodukts mittels erster Klemmmittel (3, 4), die an der ersten Struktur (2) vorgesehen sind, und Klemmen des Kopfes des zweiten Metallprodukts oder des Endes des ersten Metallprodukts mittels zweiter Klemmmittel (6, 7), die an der zweiten Struktur (5) vorgesehen sind;
b) Einstellen der Position der zweiten Struktur (5) in Bezug auf die erste Struktur (2) mittels der zweiten Einstellmittel durch Anheben der zweiten Struktur (5) entlang einer Ebene quer zur Vorschubrichtung, um das Ende und den Kopf entlang der Vorschubrichtung auszurichten;
c) Schweißen des Endes und des Kopfes durch Bewegen der zweiten Struktur (5) in der Nähe der ersten Struktur (2) entlang der Vorschubrichtung mit Hilfe der ersten Einstellmittel.

15. Verfahren nach Anspruch 14, wobei das Anheben durch eine Drehung der zweiten Struktur (5) um eine Achse C, die parallel zur Vorschubrichtung verläuft, in einem Bereich zwischen 1° und 5°, vorzugsweise zwischen 1° und 3°, erfolgt.

16. Verfahren nach Anspruch 14 oder 15, wobei zwischen Schritt a) und Schritt b) die folgenden Schritte vorgesehen sind:
- Erfassen eines Höhenunterschieds mittels mindestens eines Sensors (32) zwischen dem Kopf des in die Schweißmaschine eintretenden Metallprodukts und dem Ende eines weiteren Metallprodukts, das diesem Metallprodukt vorausgeht;
- Erfassen des Wertes des Höhenunterschieds und Senden eines Befehls mittels einer Software an die zweiten Einstellmittel, die Position der zweiten Struktur (5) in Bezug auf die erste Struktur (2) einzustellen.

## Revendications

1. Machine à souder du type à soudage par étincelage pour souder une queue d'un premier produit métallique longitudinal à une tête d'un second produit métallique longitudinal suivant une direction d'alimentation desdits produits métalliques longitudinaux, la machine comprenant un chariot (1) adapté pour coulisser suivant la direction d'alimentation, ledit chariot (1) supportant
- une première structure (2) fixée audit chariot (1) ;
- des premiers moyens de serrage (3, 4), prévus sur ladite première structure (2), pour serrer la queue du premier produit métallique ou la tête du second produit métallique ;
- une seconde structure (5) ;
- des seconds moyens de serrage (6, 7), prévus sur ladite seconde structure (5), pour serrer la tête du second produit métallique ou la queue du premier produit métallique ;
dans laquelle des premiers moyens de réglage sont prévus pour rapprocher ou éloigner la seconde structure (5) de la première structure (2) suivant ladite direction d'alimentation ; **caractérisée en ce que** ladite seconde structure (5) est reliée à ladite première structure (2) de manière à coulisser, parallèlement à la direction d'alimentation, par rapport à la fois à la première structure (2) et au chariot (1) ;
et **en ce que** des seconds moyens de réglage sont prévus pour régler, le long d'un plan transversal à ladite direction d'alimentation, la position de la seconde structure (5) par rapport à la première structure (2) au moyen d'un soulèvement de la seconde structure (5), afin d'aligner ladite queue et ladite tête.

2. Machine à souder selon la revendication 1, dans laquelle lesdits premiers moyens de réglage sont des cylindres de refoulement (22, 23), de préférence seulement au nombre de deux ; dans laquelle lesdits cylindres de refoulement (22, 23) sont articulés à une première extrémité de ceux-ci à la première structure (2) et à une seconde extrémité de ceux-ci à la seconde structure (5) au moyen de broches respectives (24, 25) ; et dans laquelle à la fois la première extrémité et la seconde extrémité de chaque cylindre de refoulement (22, 23) sont pourvues d'un joint à rotule respectif.

3. Machine à souder selon la revendication 1 ou 2, dans laquelle la seconde structure (5) est reliée à la première structure (2) d'une manière en porte-à-faux, ladite seconde structure (5) pouvant coulisser sur au moins deux supports (8, 9) fixés à la première structure (2) et faisant au moins partiellement saillie de celle-ci, et ayant des axes longitudinaux parallèles entre eux et à la direction d'alimentation ; dans laquelle au moins une première partie (8') d'un premier support (8) desdits au moins deux supports (8, 9) est en porte-à-faux et a au moins un plan de symétrie X ; dans laquelle au moins une première partie (9') d'un second support (9) desdits au moins deux supports (8, 9) est en porte-à-faux et a au moins un plan de symétrie Y ; et dans laquelle le plan de symétrie X et le plan de symétrie Y sont incidents, définissant ainsi un axe C, parallèle à la direction d'alimentation et autour duquel la seconde structure (5) peut tourner.

4. Machine à souder selon la revendication 3, dans laquelle lesdits seconds moyens de réglage sont intégrés dans la seconde structure (5) et comprennent un dispositif de poussée (20) configuré pour pousser sur au moins un des deux supports (8, 9) pour soulever la seconde structure (5).

5. Machine à souder selon la revendication 4, dans laquelle lesdits au moins deux supports sont une première poutre en porte-à-faux (8) et une seconde poutre en porte-à-faux (9), de préférence fixées à une première extrémité et une seconde extrémité de la première structure (2), respectivement ; de préférence dans laquelle ledit dispositif de poussée (20) est configuré pour pousser sur ladite seconde poutre en porte-à-faux (9) pour soulever la seconde structure (5).

6. Machine à souder selon la revendication 4 ou 5, dans laquelle la première poutre en porte-à-faux (8) a sa première partie (8'), ayant une section quadrangulaire, qui est distale par rapport à la première structure (2) et insérée dans un premier trou traversant (10), ayant une section quadrangulaire, de la seconde structure (5) pourvue, sur au moins deux côtés intérieurs opposés, de premiers rouleaux (12) pour que la seconde structure (5) coulisse sur ladite première poutre en porte-à-faux (8), et dans laquelle le plan de symétrie X de la première partie (8') est perpendiculaire aux surfaces latérales de la première partie (8') en contact avec les premiers rouleaux (12) ; de préférence dans laquelle la seconde poutre en porte-à-faux (9) a sa première partie (9'), ayant une section quadrangulaire, qui est distale de la première structure (2) et insérée dans un second trou traversant (11), ayant une section quadrangulaire, de la seconde structure (5) pourvue d'au moins trois seconds rouleaux (13, 14, 17, 18), chaque second rouleau étant disposé sur un côté intérieur respectif du second trou traversant, pour que la seconde structure (5) coulisse sur ladite seconde poutre en porte-à-faux (9), et dans laquelle le plan de symétrie Y de la première partie (9') est parallèle à la surface latérale de la première partie (9') en contact avec un rouleau supérieur (14) desdits au moins trois seconds rouleaux ; de préférence dans laquelle le rouleau supérieur (14) desdits au moins trois seconds rouleaux est monté sur une partie excentrique d'un arbre rotatif (21) et le dispositif de poussée (20) est adapté pour faire tourner ledit arbre rotatif de sorte que ledit rouleau supérieur (14) pousse sur ladite seconde poutre en porte-à-faux (9) pour soulever la seconde structure (5).

7. Machine à souder selon la revendication 6, dans laquelle, dans une position de repos, la première partie (9') de la seconde poutre en porte-à-faux (9) est en contact avec le rouleau supérieur (14), qui est dans une position rétractée à l'intérieur d'un siège de celui-ci, et en contact avec deux rouleaux latéraux (13, 18) desdits seconds rouleaux, tandis qu'un espace (19) est présent entre un côté intérieur inférieur du second trou traversant (11) et ladite première partie (9') ou entre un rouleau inférieur (17) desdits seconds rouleaux et ladite première partie (9') ; et dans laquelle, dans une position de poussée, le rouleau supérieur (14) est dans une position plus saillante par rapport à son siège, par rapport au cas de la position de repos, de sorte que la seconde structure (5) est soulevée, de préférence soulevée jusqu'à un contact possible entre le rouleau inférieur (17) et la première partie (9').

8. Machine à souder selon la revendication 6 ou 7, dans laquelle la première poutre en porte-à-faux (8) a une seconde partie qui est proximale et fixée intégralement à la première structure (2), tandis que la première partie (8') est en porte-à-faux ; et/ou dans laquelle la seconde poutre en porte-à-faux (9) a une seconde partie qui est proximale et fixée intégralement à la première structure (2), tandis que la première partie (9') est en porte-à-faux.

9. Machine à souder selon l'une des revendications 6 à 8, dans laquelle ledit dispositif de poussée (20) comprend un actionneur (16) adapté pour actionner un levier (15) à une première extrémité de celui-ci, ledit levier (15) étant solidaire, à une seconde extrémité de celui-ci, de l'arbre rotatif (21) sur lequel le rouleau supérieur (14) est claveté.

10. Machine à souder selon l'une des revendications de 6 à 9, dans laquelle une paire de premiers rouleaux (12) est prévue sur chacun desdits deux côtés intérieurs opposés du premier trou traversant (10).

11. Machine à souder selon l'une des revendications de 6 à 10, dans laquelle lesdits premiers rouleaux (12) ont une surface latérale convexe (30) en contact avec une surface latérale respective de la première poutre en porte-à-faux (8).

12. Machine à souder selon l'une des revendications de 6 à 11, dans laquelle lesdits premiers rouleaux (12) sont libres, logés dans des sièges respectifs obtenus dans la seconde structure (5) et faisant saillie dans le premier trou traversant (10) pour venir en contact avec des surfaces mutuellement opposées de la première poutre en porte-à-faux (8) ; de préférence, dans laquelle les deux rouleaux latéraux (13, 18) et l'éventuel rouleau inférieur (17) desdits seconds rouleaux sont libres, logés dans des sièges respectifs obtenus dans la seconde structure (5) et faisant saillie dans le second trou traversant (11), tandis que le rouleau supérieur (14) est un rouleau entraîné, mais libre en rotation.

13. Machine à souder selon l'une quelconque des revendications précédentes, dans laquelle il est prévu au moins un capteur (32), adapté pour détecter la différence de hauteur entre la tête du produit métallique entrant dans la machine à souder et la queue d'un autre produit métallique précédant ledit produit métallique ; et dans laquelle il est prévu un logiciel, adapté pour acquérir la valeur de ladite différence de hauteur et envoyer une commande aux seconds moyens de réglage pour régler la position de la seconde structure (5) par rapport à la première structure (2).

14. Procédé de soudage du type soudage par étincelage pour souder ensemble une queue d'un premier produit métallique longitudinal à une tête d'un second produit métallique longitudinal alimenté suivant une direction d'alimentation desdits produits métalliques longitudinaux, le procédé pouvant être réalisé au moyen d'une machine à souder selon l'une quelconque des revendications précédentes et comprenant les étapes suivantes :
a) le serrage de la queue du premier produit métallique ou de la tête du second produit métallique au moyen de premiers moyens de serrage (3, 4) prévus sur ladite première structure (2), et le serrage de la tête du second produit métallique ou de la queue du premier produit métallique au moyen de seconds moyens de serrage (6, 7) prévus sur ladite seconde structure (5) ;
b) le réglage, au moyen desdits seconds moyens de réglage, de la position de la seconde structure (5) par rapport à la première structure (2) au moyen d'un soulèvement de la seconde structure (5) le long d'un plan transversal à ladite direction d'alimentation, de façon à aligner ladite queue et ladite tête suivant la direction d'alimentation ;
c) le soudage de ladite queue et ladite tête en déplaçant la seconde structure (5) près de la première structure (2) suivant ladite direction d'alimentation, au moyen desdits premiers moyens de réglage.

15. Procédé selon la revendication 14, dans lequel ledit soulèvement se produit au moyen d'une rotation de la seconde structure (5) autour d'un axe C, parallèle à la direction d'alimentation, dans une plage comprise entre 1° et 5°, de préférence entre 1° et 3°.

16. Procédé selon la revendication 14 ou 15, dans lequel les étapes suivantes sont prévues entre l'étape a) et l'étape b) :
- la détection d'une différence de hauteur, au moyen d'au moins un capteur (32), entre la tête du produit métallique entrant dans la machine à souder et la queue d'un autre produit métallique précédant ledit produit métallique ;
- l'acquisition de la valeur de ladite différence de hauteur et l'envoi, au moyen d'un logiciel, d'une commande au second moyen de réglage pour régler la position de la seconde structure (5) par rapport à la première structure (2).
